(19)

**Europäisches Patentamt**

**European Patent Office**

**Office européen des brevets**

(11) **EP 4 603 798 A2**

(12) **EUROPEAN PATENT APPLICATION**

(43) Date of publication:
20.08.2025 Bulletin 2025/34

(21) Application number: 25156705.3

(22) Date of filing: 07.02.2025

(51) International Patent Classification (IPC):
*G01C 19/5719* (2012.01)    *G01C 19/5776* (2012.01)

(52) Cooperative Patent Classification (CPC):
G01C 19/5776; G01C 19/5719

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.02.2024 US 202463553066 P
07.08.2024 US 202418796682**

(71) Applicant: **Analog Devices, Inc.
Wilmington, MA 01887 (US)**

(72) Inventors:
• **CLARK, William A.
Wilmington, 01887 (US)**
• **DUNN, Tyler Adam
Wilmington, 01887 (US)**
• **MERRITT, Carey R.
Wilmington, 01887 (US)**
• **KRISHNASWAMY, Anjan Kumar
Wilmington, 01887 (US)**

(74) Representative: **Wallin, Nicholas James
Withers & Rogers LLP
2 London Bridge
London SE1 9RA (GB)**

(54) **GYROSCOPIC SENSOR SYSTEM ADJUSTMENT**

(57)    A gyroscopic sensor system can include a proof mass, which can be configured to vibrate in a first primary mode and a second primary mode, where the first primary mode can be driven into resonance, where an in-phase signal can be induced in the second primary mode in response to a rotation of the gyroscopic sensor system. The gyroscopic sensor system can also include a quadrature force circuit, which can be configured to force the second primary mode of the proof mass. The gyroscopic sensor system can also include control circuitry, which can be configured to drive the quadrature force circuit using a quadrature test signal which can be configured to generate a quadrature response in the proof mass that can be in quadrature with the in-phase signal. The control circuitry can also be configured to measure the quadrature response of the proof mass to the quadrature test signal.

FIG. 1

EP 4 603 798 A2

## Description

CLAIM OF PRIORITY

This patent application claims the benefit of priority of Clark et al., U.S. Provisional Patent Application Serial 63/553,066, entitled "QUADRATURE FORCE BASED CONTINUOUS SELF-TEST IN MEMS GYROSCOPE," filed on February 13, 2024 (Attorney Docket No. 3867.C17PRV), and US Patent Application No. 18/796,682, filed August 7, 2024, entitled "Gyroscopic Sensor System Adjustment", both of which are hereby incorporated by reference herein in their entirety.

TECHNICAL FIELD

The present disclosure relates to gyroscopic sensors, and more particularly, but not by way of limitation, to adjustment or calibration of a gyroscopic sensor system.

BACKGROUND

Gyroscopic sensors can be used to sense a rotation rate about an axis. The sensed rotation rate can be used to determine an angular velocity, an angular acceleration, or both. Gyroscopic sensors can be used in handheld electronics (e.g., smartphones), vehicles, or aerospace applications.
A gyroscopic sensor can be implemented at least in part in a micro-electro-mechanical system (MEMS), which can include one or more mechanical components that are integral to a circuit chip. For example, a proof mass in a gyroscopic sensor can be manufactured at least in part using processes similar to integrated circuit production (e.g., photolithography, etching, deposition).

SUMMARY

In an example, a gyroscopic sensor system can include a proof mass, which can be configured to vibrate in a first primary mode and a second primary mode, where the first primary mode can be driven into resonance, where an in-phase signal can be induced in the second primary mode in response to a rotation of the gyroscopic sensor system. The gyroscopic sensor system can also include a quadrature force circuit, which can be configured to force the second primary mode of the proof mass. The gyroscopic sensor system can also include control circuitry, which can be configured to drive the quadrature force circuit using a quadrature test signal which can be configured to generate a quadrature response in the proof mass that can be in quadrature with the in-phase signal. The control circuitry can also be configured to measure the quadrature response of the proof mass to the quadrature test signal.
In an example, a method for adjusting a gyroscopic sensor system including a proof mass can include forcing the proof mass using a quadrature test signal that can be configured to generate a quadrature response in the proof mass that can be in quadrature with an in-phase signal of the gyroscopic sensor system. The method can also include measuring the quadrature response of the proof mass to the quadrature test signal. The method can also include comparing the quadrature response to a reference response.
In an example, a gyroscopic sensor system can include a proof mass, which can be configured to vibrate in a first primary mode and a second primary mode, where the first primary mode can be driven into resonance, where an in-phase signal can be induced in the second primary mode in response to a rotation of the gyroscopic sensor system. The gyroscopic sensor system can also include a quadrature force circuit, which can be configured to force the second primary mode of the proof mass. The gyroscopic sensor system can also include control circuitry, which can be configured to drive the quadrature force circuit using a quadrature test signal which can be configured to generate a quadrature response in the proof mass that can be in quadrature with the in-phase signal. The control circuitry can also be configured to measure the quadrature response of the proof mass to the quadrature test signal. The control circuitry can also be configured to make an adjustment to the gyroscopic sensor system based on the measured quadrature response.

BRIEF DESCRIPTION OF THE DRAWINGS

In the drawings, which may not be drawn to scale, like numerals may describe substantially similar components throughout one or more of the views. Like numerals having different letter suffixes may represent different instances of substantially similar components. The drawings illustrate generally, by way of example but not by way of limitation.

FIG. 1 shows an example of portions of a block diagram of a gyroscopic sensor system.
FIG. 2 shows a graphical representation of an example of portions of the response of the gyroscopic structure to an AC quadrature test signal.

FIG. 3 shows an example of portions of a method for operating a gyroscopic sensor system.

FIG. 4 is a block diagram of an example of portions of a machine upon which one or more portions of the present disclosure may be implemented.

DETAILED DESCRIPTION

A gyroscopic sensor can be adjusted (e.g., calibrated), such as to alter an accuracy of an output signal. For example, variations in one or more of production, installation, or operating conditions can affect the response of a gyroscopic sensor to an input signal (e.g., a rotation). The gyroscopic sensor can be adjusted so that an output of the system (e.g., a rotation rate) more closely matches the input signal. In an example, a gyroscopic sensor can be calibrated using an input rotation, such as at the time of manufacturing or during a startup calibration. However, it may be difficult to perform a calibration using an input rotation during use.

In an example, an input test signal can be input to the gyroscopic sensor (e.g., forcing a proof mass using an electrical stimulus, such as can apply an electrostatic force to the proof mass), and a response to the input test signal can be measured. The gyroscopic sensor can be adjusted based on the measured response. This can be performed during runtime.

In an approach, the input test signal can be provided to electrodes that force the proof mass in phase with the rotational response signal. However, this can one or more of increase a noise level in the signal chain, interfere with the rotational response signal, or be confused with the rotational response signal. The present inventors have recognized, among other things, that it can be desirable to provide an input test signal that is in quadrature (e.g., 90 degrees out of phase) with the in-phase rotational response signal. This can alter an effect that the input test signal has on the noise in the signal chain, interference in the signal chain, or both, which can include reducing a noise in the signal chain as compared to forcing the proof mass in phase with the rotational response signal.

The present inventors have also recognized, among other things, that the response to a quadrature test signal can more closely match the response of the gyroscopic sensor to an input rotation than an in-phase test signal. This can allow an adjustment performed with a quadrature test signal to adjust for one or more factors that an adjustment performed with an in-phase test signal may not be able to adjust for.

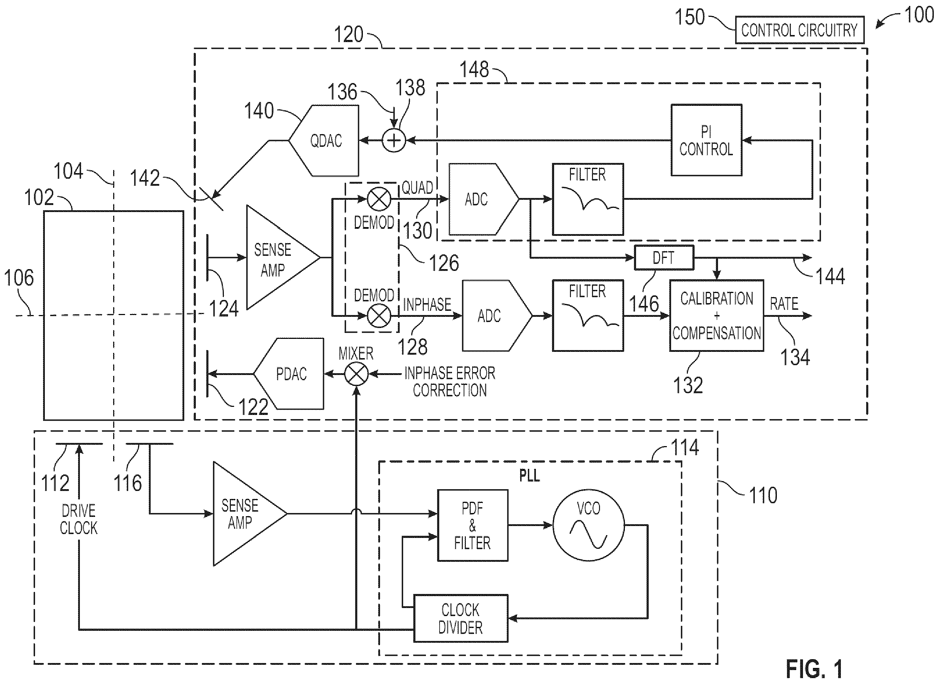

FIG. 1 shows an example of portions of a block diagram of a gyroscopic sensor system 100. FIG. 1 shows that the gyroscopic sensor system 100 can include a gyroscopic structure 102, resonator axis components 110, sense axis components 120, and control circuitry 150. The gyroscopic sensor system 100 can be configured to measure a response of the gyroscopic structure 102 to a quadrature test signal. The gyroscopic sensor system 100 can make an adjustment based on the measured quadrature response, which can include making an adjustment to increase an accuracy, precision, or both, of a gyroscopic output.

The gyroscopic structure 102 can include a proof mass. The proof mass can include one or more materials. The proof mass can take any form. In an example, the proof mass can include a block of silicon. The proof mass can be configured to move in one or more directions, which can include being connected to a substrate (e.g., the substrate of a MEMS integrated circuit chip or package substrate) via one or more mechanical connections. The mechanical connections can provide a degree of motion to the proof mass, and can provide a restoring force (e.g., a spring force) when the proof mass is displaced from a neutral position.

The proof mass can be configured to vibrate in one or more modes, which can include a first primary mode and a second primary mode. In the example of FIG. 1, the first primary mode and the second primary mode can be primary modes of a proof mass along orthogonal axes. However, the first primary mode and the second primary mode can take any form. For example, one or more of the first primary mode and the second primary mode can be modes of vibration of a disc.

The first primary mode can be along the resonator axis 104. The first primary mode can be driven into resonance, such as by the resonator axis components 110. For example, the resonator axis components 110 can provide a signal that causes the proof mass to oscillate along the resonator axis 104 at a frequency generally matching the frequency of the first primary mode.

The second primary mode can be along the sense axis 106. A signal in the second primary mode can be induced in response to a rotation of the gyroscopic sensor system 100. This signal can be called the in-phase signal. For example, when the gyroscopic sensor system 100 is rotated, the gyroscopic structure 102 can rotate along with the gyroscopic sensor system 100. The substrate around the proof mass can rotate, which can cause a portion of the signal in the first primary mode (e.g., the resonator axis 104) to couple into the second primary mode (e.g., the sense axis 106). A magnitude of the signal in the second primary mode can be indicative of a rate of rotation of the gyroscopic sensor system 100.

The resonator axis components 110 can be configured to drive the proof mass into resonance, which can include resonance in the first primary mode. The resonator axis components 110 can include a resonator electrode 112, phase locked loop circuitry 114, and a resonator sense circuit 116. The resonator electrode 112 can be configured to apply a force (e.g., an electrostatic force, such as due to an electrical signal applied to the resonator electrode 112) to the proof mass, such as along the resonator axis 104. The resonator electrode 112 can receive an electrical signal (e.g., voltage, current) and apply a force to the proof mass based on the received electrical signal, such as through one or more of electrical interaction (e.g., generating an electric field to affect the proof mass), magnetic interaction (e.g., generating a magnetic field to affect the proof mass) or electromagnetic interaction (e.g., generating an electromagnetic signal to affect the proof mass).

The resonator sense circuit 116 can be configured to generate a signal indicative of a position of the proof mass, a motion of the proof mass, or both, such as along the resonator axis 104. The resonator sense circuit 116 can include a capacitive sensor.

The phase locked loop circuitry 114 can be configured to provide a signal to the resonator electrode 112 to drive the proof mass into resonance, which can include using a feedback signal from the resonator sense circuit 116.

The sense axis components 120 can include an in-phase electrode 122, a sense circuit 124, demodulation circuitry 126, gyroscopic analysis circuitry 132, an adder 138, a quadrature DAC 140, and a quadrature force circuit 142. The in-phase electrode 122 can be configured similarly to the resonator electrode 112, or can differ in one or more ways. The in-phase electrode 122 can be configured to apply a force to the proof mass, which can include a force along the sense axis 106. The in-phase electrode 122 can be used to correct or adjust for an error of the gyroscopic sensor system 100, such as an in-phase error.

The sense circuit 124 can be configured similarly to the resonator sense circuit 116, or can differ in one or more ways. The sense circuit 124 can be configured to generate a signal indicative of a position of the proof mass, a motion of the proof mass, or both, such as along the sense axis 106. The sense circuit 124 can be configured to measure motion of the proof mass in the second primary mode.

The demodulation circuitry 126 can demodulate a signal generated by the sense circuit 124 into an in-phase signal on the in-phase signal node 128 and a quadrature signal on the Quadrature signal node 130. The in-phase signal can be induced at least in part from cross coupling with the first primary mode during rotation of the gyroscopic sensor system 100. The phase of the in-phase signal can be specified, measured, or calibrated. For example, the phase of the in-phase signal can match a phase of the resonant signal in the first primary mode.

The gyroscopic analysis circuitry 132 can be configured to use the in-phase signal to determine a rate of rotation of the proof mass about a gyroscopic axis (e.g., the axis about which the gyroscopic sensor system 100 measures rotation). The gyroscopic analysis circuitry 132 can receive a signal indicative of the in-phase signal (e.g., a filtered version of the in-phase signal), a signal indicative of the quadrature signal (e.g., a filtered version of the quadrature signal), or both. The gyroscopic analysis circuitry 132 can generate a signal indicative of the rotation rate of the gyroscopic sensor system 100 on the output signal node 134.

The determined rotation rate can be affected by a sensitivity of the gyroscopic sensor system 100, which can include being proportional to the sensitivity of the gyroscopic sensor system 100. The proportionality of the sensitivity of the system can be shown in equation 1.

$$Sensitivity \propto \omega_{res} * x_{res} * \frac{1}{\triangle f} * T_{cor}$$

Equation 1

In equation 1, $\omega_{res}$ is the frequency of the first primary mode, which can be expressed in units of radians per second, $x_{res}$ is the displacement of the proof mass, such as in the first primary mode (e.g., along the resonator axis 104), which can be expressed in units of meters, $\triangle f$ is the frequency difference between the first primary mode and the second primary mode, which can be expressed in units of radians per second, and $T_{cor}$ is the Coriolis sense transduction of the gyroscopic structure 102, which can be expressed in units of farads per meter. In an example, $\omega_{res}$ can be specified or measured. In an example, $x_{res}$ can be specified or measured (e.g., using the resonator sense circuit 116). In an example, $\triangle f$ can be specified or measured. In an example, $T_{cor}$ can be specified or measured. In an example, one or more of the values in equation 1 can change and/or drift over time or differ between components, such as due to process variation, temperature variation, etc. This can make it desirable to be able to measure or otherwise determine information about one or more components of equation 1, such as to adjust for the value of the component.

The adder 138 can add a representation of the quadrature signal (e.g., a filtered version of the quadrature signal) to the quadrature test signal. The quadrature digital-to-analog converter (DAC) 140 can convert the output of the adder 138 to analog format. In an example where the quadrature signal and the quadrature test signal are analog, the quadrature DAC 140 can be omitted.

The quadrature force circuit 142 can be configured similarly to one or more of the resonator electrode 112 or the in-phase electrode 122, or can differ in one or more ways. The quadrature force circuit 142 can be configured to apply a force to the proof mass, such as along the sense axis 106. The quadrature force circuit 142 can be configured to apply a force to the proof mass along the sense axis 106 that is configured to produce a response in the proof mass (e.g., a quadrature response) that is in quadrature with the in-phase signal (e.g., the signal on the in-phase signal node 128). The quadrature force circuit can be configured to force the second primary mode of the proof mass.

The control circuitry 150 can be configured to control one or more portions of the gyroscopic sensor system 100. In an example, one or more portions of the resonator axis components 110 (e.g., the phase locked loop circuitry 114), the sense axis components 120 (e.g., the gyroscopic analysis circuitry 132), or both, can include or be included in the control circuitry 150. The control circuitry 150 can be configured to drive the quadrature force circuit 142 using a quadrature test signal that is configured to generate a quadrature response in the proof mass that is in quadrature with the in-phase signal. The quadrature test signal can be in quadrature with the in-phase signal, or the quadrature test signal can be configured to be phase shifted from the in-phase signal by other than 90 degrees. The quadrature test signal can have any amplitude, which can include a specified or calibrated amplitude. The quadrature test signal can have a configured frequency, which can match a frequency of the first primary mode or the second primary mode, or can differ from a frequency of the first primary mode and the second primary mode.

The control circuitry 150 can be configured to measure a quadrature response of the proof mass to the quadrature test signal. The sense circuit 124 can be configured to measure the quadrature response of the proof mass to the quadrature test signal. For example, the quadrature signal on the quadrature signal node 130 can be processed to determine the quadrature response on the quadrature response node 144. The frequency component matching the frequency of the quadrature test signal can be extracted. In an example, a frequency component of the quadrature signal can be extracted, such as using frequency analysis circuitry 146. The frequency analysis circuitry 146 can be configured to extract an amplitude of a specified frequency component of the quadrature signal. The specified frequency component has a specified frequency matching a frequency of the quadrature test signal. The extracted amplitude of the specified frequency component can include the quadrature response of the proof mass to the quadrature test signal. The specified frequency (e.g., of the quadrature test signal) can be configured to differ from a resonant frequency of the first primary mode, the resonant frequency of the second primary mode, or both. This can help to allow the quadrature response to be separated from the motion of the proof mass due to the resonator axis components 110 or the Coriolis response in the second primary mode. Additionally or alternatively, the quadrature test signal being in quadrature with the in-phase signal can help to allow the quadrature response to be separated.

The quadrature response to the quadrature test signal can be indicative of a sensitivity of the gyroscopic sensor system 100, which can include a sensitivity of the gyroscopic structure 102. In an example, a proportionality of the quadrature response can be shown by equation 2.

$$Quadrature\ Response\ \propto\ x_{res}*\frac{1}{\triangle f}*T_{cor} \qquad E$$

quation 2

Equation 2 shows that the proportionality of the quadrature response can be similar to the proportionality of the sensitivity shown in equation 1. However, the frequency of the first primary mode, $\omega_{res}$ may not be present in equation 2. In an example, the frequency of the first primary mode can be determined, such as using the resonator sense circuit 116, the phase locked loop circuitry 114, or both, such as can help to allow the frequency of the first primary mode to be accounted for. In an example, equation 2 may represent the proportionality of the quadrature response for a direct current (DC) signal on the quadrature force circuit 142. The quadrature response for an alternating current (AC) signal on the quadrature force circuit 142 may be different, such as shown in equation 3. In an example, the quadrature test signal includes an alternating current signal.

$$Quadrature\ Response\ \propto\ x_{res}*\left(\frac{1}{\triangle f - f_{QTS}} + \frac{1}{\triangle f + f_{QTS}}\right)*T_{cor}$$

Equation 3

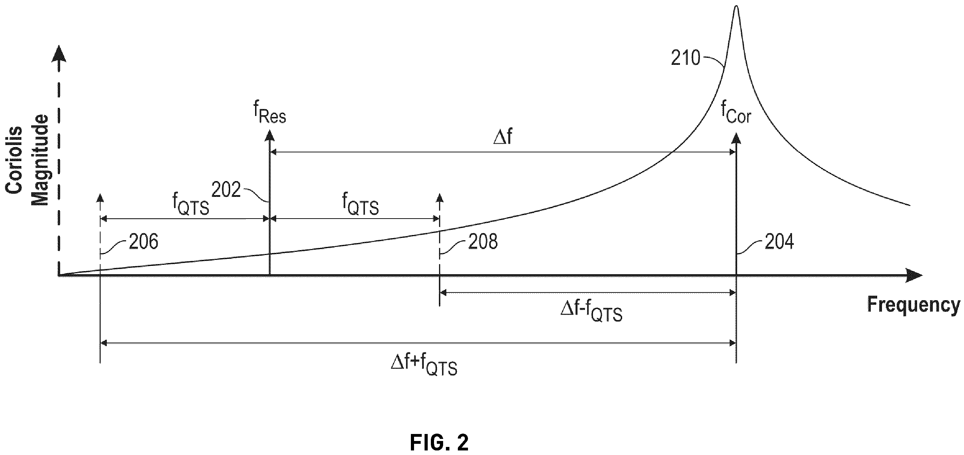

In equation 3, $f_{QTS}$ is the frequency of the quadrature test signal. Equation 3 shows that an AC signal can form two sidebands around the resonant frequency (e.g., the carrier frequency), which can be graphically shown and discussed with respect to FIG. 2.

The control circuitry can be configured to compare the quadrature response of the proof mass to a reference response. The reference response can include one or more of a quadrature response to the quadrature test signal that has been previously measured (e.g., a previously measured response to the same or similar quadrature test signal (e.g., same amplitude, same frequency)) or an expected quadrature response to the quadrature test signal (e.g., a signal that is predicted, such as predicted based on a simulation of the gyroscopic structure 102). For example, the quadrature response could be measured following a factory or field calibration to generate the reference response. For example, the gyroscopic sensor system 100 can be calibrated by providing a specified rotation rate and adjusting the gyroscopic sensor system 100 until the signal on the output signal node 134 indicates the specified rotation rate. Following the calibration, the quadrature response to a quadrature test signal can be measured and recorded.

As the sensitivity of the system (e.g., shown by equation 1) changes, the gyroscopic sensor system 100 can go out of calibration. By measuring a quadrature response to the quadrature test signal, the sensitivity change caused by the components in equation 2 can be measured. This sensitivity change can be accounted for, such as by adjusting the gyroscopic sensor system 100. The control circuitry can be configured to make an adjustment to the gyroscopic sensor system 100, such as based on a result of the comparison of the quadrature response to the reference response.

Making an adjustment to the gyroscopic sensor system based on the result of the comparison can include one or more of adjusting the gyroscopic sensor system 100 (e.g., changing a property of the gyroscopic sensor system 100, such as the gyroscopic structure 102) to at least partially account for a difference between the quadrature response and the reference response or adjusting an output value of the gyroscopic sensor system to at least partially account for a difference between the quadrature response and the reference response (e.g., adjusting the output on the output signal node 134, such as by using a multiplicative scaling factor based on the change in sensitivity).

In an example, making an adjustment to the gyroscopic sensor system 100 based on the result of the comparison can include adjusting a property of at least one of the first primary mode or the second primary mode. For example, a resonant frequency of the first primary mode, the second primary mode, or both, can be adjusted. For example, the frequency of the first primary mode can be adjusted, such as by applying a signal to one or more tuning electrodes. In an example, an amplitude of the first primary mode, the second primary mode, or both can be adjusted, alternatively or in addition to adjusting a frequency.

In an example, the adjustment to the gyroscopic sensor system 100 can at least partially account for an effect that a change in an amplitude of the proof mass has on the output value (e.g., on the output signal node 134) of the gyroscopic sensor system 100. As shown in equation 1, a change in amplitude of the proof mass can affect the sensitivity of the gyroscopic sensor system 100. This change in amplitude can also affect the quadrature response shown in equation 2. By adjusting or compensating for the change in the quadrature response, a change in amplitude of the proof mass can be adjusted or compensated for.

The adjustment can at least partially account for a change in sensitivity of the gyroscopic sensor system. For example, the sensitivity (e.g., as shown in equation 1) of the gyroscopic sensor system 100 can change over time, vary between devices, or both, and the adjustment can adjust, account, or correct for this. In an example, the adjustment can include adjusting a difference between a resonant frequency of the first primary mode and a resonant frequency of the second primary mode (e.g., adjusting $\triangle f$). Equations 1 through 3 show that $\triangle f$ can affect the sensitivity of the gyroscopic sensor system 100 to a rotation signal, a quadrature test signal, or both. Adjusting $\triangle f$ can change this sensitivity, which can adjust the sensitivity towards the sensitivity of the gyroscopic sensor system 100 when the reference response was measured, change the output value on the output signal node 134 (e.g., calibrate the gyroscopic sensor system 100), or both. Adjusting $\triangle f$ can include changing a property of the gyroscopic structure 102, the resonator axis components 110, or the sense axis components 120. For example, one or more tuning electrodes in the gyroscopic structure 102 can be adjusted, the amplitude of the proof mass can be adjusted, or a forcing frequency of the phase locked loop circuitry 114 can be adjusted.

The measurement of the quadrature response can be performed at any time, which can include at the time of manufacturing (e.g., a factory calibration), during startup at runtime (e.g., an initialization calibration), or periodically or otherwise recurrently during runtime (e.g., an ongoing test and/or calibration). In an example, the control circuitry 150 can recurrently measure the quadrature response of the proof mass to the quadrature test signal, such as can provide a recurrent indication of the sensitivity of the gyroscopic sensor system 100, which can allow for a recurrent adjustment. The quadrature response can be measured at any interval, which can include approximately every minute, approximately every 10 seconds, approximately every second, or approximately 10 times per second or more.

The sense axis components 120 can include a quadrature error correction circuit 148. The quadrature error correction circuit 148 can be configured to force the quadrature force circuit 142 using a quadrature error correction signal. The quadrature error correction signal can be configured to correct for a quadrature error of the gyroscopic sensor system 100. The quadrature error in the gyroscopic sensor system 100 can arise at least in part from a cross-axis stiffness of the gyroscopic structure 102 (e.g., a portion of the first primary mode couples to the second primary mode even when the gyroscopic sensor system 100 is not rotating). The quadrature error correction signal can be or include a DC signal. Because of the motion of the proof mass, a DC signal on the quadrature force circuit 142 can have a periodic effect (e.g., AC effect) on the proof mass. For example, the effect of the DC signal can be greater when the proof mass is closer and/or lesser when the proof mass is farther away. This can result in the force on the proof mass caused by a DC signal on the quadrature force circuit 142 having an AC effect at approximately the frequency of the first primary mode, the second primary mode, or a composite frequency. The quadrature test signal can be or include an AC component. The quadrature force circuit 142 can be configured to be driven by a sum of the quadrature test signal and the quadrature error correction signal (e.g., the output of the adder 138).

FIG. 2 shows a graphical representation of an example of portions of the response of the gyroscopic structure 102 to an AC quadrature test signal, which can include a frequency plot representation. FIG. 2 shows that the frequency of the first primary mode (e.g., the resonator frequency 202) $f_{res}$ can differ from the frequency of the second primary mode (e.g., the Coriolis frequency 204) $f_{cor}$. As discussed above, the difference between $f_{res}$ and $f_{cor}$ can be $\triangle f$. The quadrature response can include two sidebands around the resonator frequency 202, which can include a first side band 206 and a second side band 208. Because $\triangle f$ and $f_{QTS}$ can be specified, measured, or calibrated values, the proportionality of equation 3 as related to equation 1 can be determined, which can help to allow for an AC quadrature test signal to be used to adjust the gyroscopic sensor system 100.

FIG. 2 also shows the Coriolis response 210, which can include or be included in the in-phase signal. The Coriolis response 210 has a Coriolis magnitude that can vary across frequencies. FIG. 2 shows that the Coriolis magnitude of the Coriolis response 210 can peak at the Coriolis frequency 204. The Coriolis response 210 can be induced in the second primary mode, such as due to coupling between the first primary mode and the second primary mode when the gyroscopic sensor system 100 rotates.

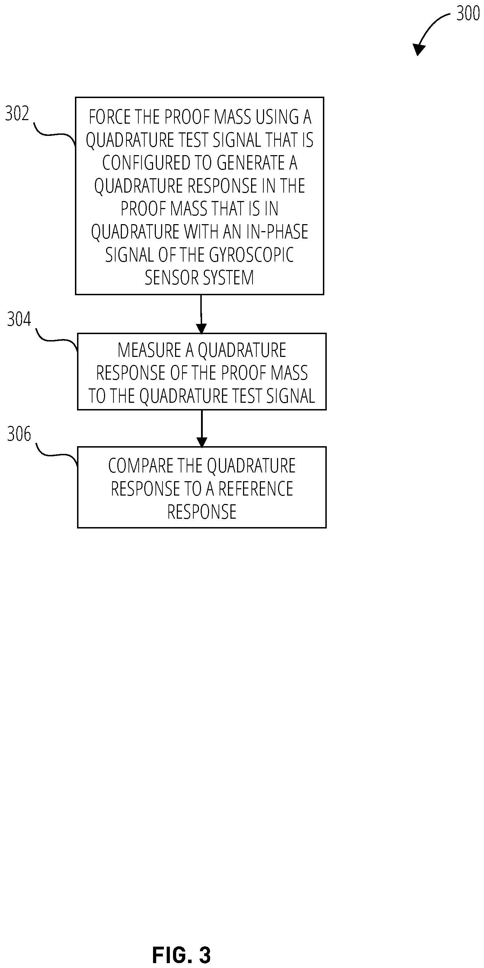

FIG. 3 shows an example of portions of a method 300 for operating a gyroscopic sensor system, such as the gyroscopic sensor system 100. The method 300 can include a method for adjusting a gyroscopic sensor system including a proof mass. The adjustment to the gyroscopic sensor system can alter an accuracy, precision, sensitivity, or calibration of the gyroscopic sensor system, which can include adjusting an output value of the gyroscopic sensor system towards an accurate output value. At step 302, the proof mass can be forced using a quadrature test signal that is configured go generate a quadrature response in the proof mass that is in quadrature with an in-phase signal of the gyroscopic sensor system. The quadrature test signal can include an AC signal at a specified frequency.

At step 304, a quadrature response of the proof mass to the quadrature test signal can be measured. This can include measuring a motion of the proof mass that is in quadrature with the in-phase signal, determining an amplitude of a frequency component of the quadrature response at the specified frequency, or both.

At step 306, the quadrature response can be compared to a reference response. The reference response can include one or more of a quadrature response to the quadrature test signal that has been previously measured or an expected quadrature response to the quadrature test signal.

The method can also include adjusting the gyroscopic sensor system, such as to at least partially account for a difference between the quadrature response and the reference response and/or adjusting an output value of the gyroscopic sensor system to at least partially account for a difference between the quadrature response and the reference response.

The shown order of steps is not intended to be a limitation on the order in which the steps are performed. In an example, two or more steps may be performed simultaneously or at least partially concurrently.

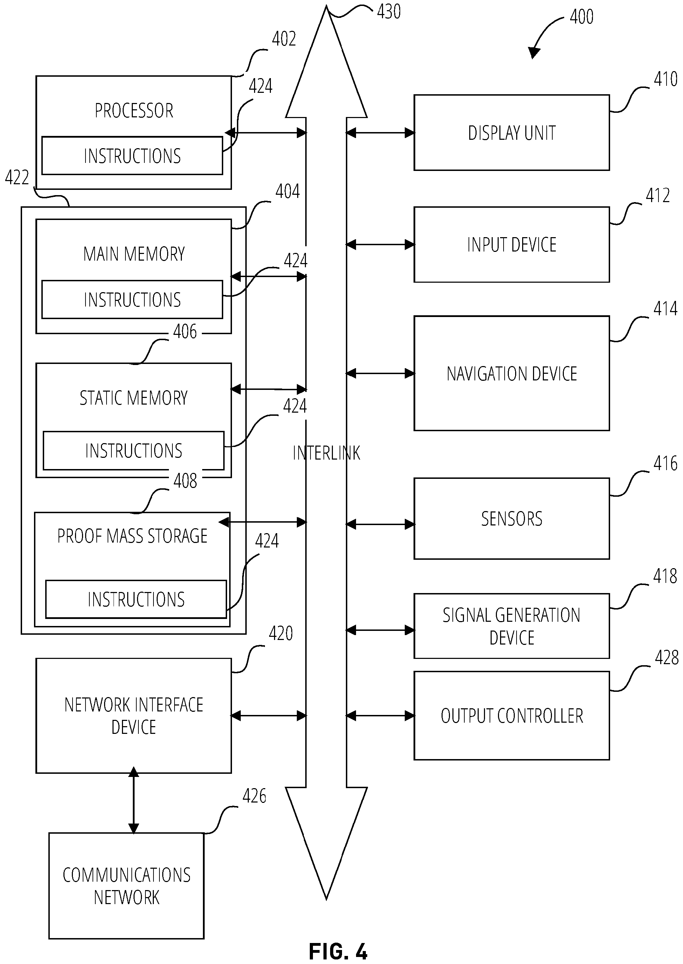

FIG. 4 illustrates a block diagram of an example machine 400 upon which any one or more of the techniques (e.g., methodologies) discussed herein may be implemented. Examples, as described herein, may include, or may operate by, logic or a number of components, or mechanisms in the machine 400. Circuitry (e.g., processing circuitry) is a collection of circuits implemented in tangible entities of the machine 400 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 400 follow.

In alternative examples, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environment. The machine 400 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine 400 may include a hardware processor 402 (e.g., a central processing unit (CPU), a graphics processing unit (GPU), a hardware processor core, or any combination thereof), a main memory 404, a static memory (e.g., memory or storage for firmware, microcode, a basic-input-output (BIOS), and proof mass storage 408 (e.g., hard drives, tape drives, flash storage, or other block devices) some or all of which may communicate with each other via an interlink 430 (e.g., bus). The machine 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The machine 400 may additionally include a signal generation device 418 (e.g., a speaker), a network interface device 420, and one or more sensors 416, such as a global positioning system (GPS) sensor, compass, accelerometer, or other sensor. The machine 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 402, the main memory 404, the static memory 406, or the proof mass storage 408 may be, or include, a machine readable medium 422 on which is stored one or more sets of data structures or instructions 424 (e.g., software) embodying or utilized by any one or more of the techniques or functions described herein. The instructions 424 may also reside, completely or at least partially, within any of registers of the processor 402, the main memory 404, the static memory 406, or the proof mass storage 408 during execution thereof by the machine 400. In an example, one or any combination of the hardware processor 402, the main memory 404, the static memory 406, or the proof mass storage 408 may constitute the machine readable media 422. While the machine readable medium 422 is illustrated as a single medium, the term "machine readable medium" may include a single medium or multiple media (e.g., a centralized or distributed database, and/or associated caches and servers) configured to store the one or more instructions 424.

The term "machine readable medium" may include any medium that is capable of storing, encoding, or carrying instructions for execution by the machine 400 and that cause the machine 400 to perform any one or more of the techniques of the present disclosure, or that is capable of storing, encoding or carrying data structures used by or associated with such instructions. Non-limiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) proof mass, and thus are compositions of matter. Accordingly, non-transitory machine-readable media are machine readable media that do not include transitory propagating signals. Specific examples of non-transitory machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 422 may be representative of the instructions 424, such as instructions 424 themselves or a format from which the instructions 424 may be derived. This format from which the instructions 424 may be derived may include source code, encoded instructions (e.g., in compressed or encrypted form), packaged instructions (e.g., split into multiple packages), or the like. The information representative of the instructions 424 in the machine readable medium 422 may be processed by processing circuitry into the instructions to implement any of the operations discussed herein. For example, deriving the instructions 424 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 424.

In an example, the derivation of the instructions 424 may include assembly, compilation, or interpretation of the information (e.g., by the processing circuitry) to create the instructions 424 from some intermediate or preprocessed format provided by the machine readable medium 422. The information, when provided in multiple parts, may be combined, unpacked, and modified to create the instructions 424. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 424 may be further transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi®, IEEE 802.15.4 family of standards, peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 400, and includes digital or analog communications signals or other intangible medium to facilitate communication of such software. A transmission medium is a machine-readable medium.

The following, non-limiting examples, detail certain aspects of the present subject matter to solve the challenges and provide the benefits discussed herein, among others.

Examples:

Example 1 is a gyroscopic sensor system, comprising: a proof mass, configured to vibrate in a first primary mode and a second primary mode, wherein the first primary mode is driven into resonance, wherein an in-phase signal is induced in the second primary mode in response to a rotation of the gyroscopic sensor system; a quadrature force circuit, configured to force the second primary mode of the proof mass; and control circuitry, configured to: drive the quadrature force circuit using a quadrature test signal that is configured to generate a quadrature response in the proof mass that is in quadrature with the in-phase signal; and measure the quadrature response of the proof mass to the quadrature test signal.

In Example 2, the subject matter of Example 1 optionally includes wherein: the control circuitry is configured to: compare the quadrature response of the proof mass to a reference response, wherein the reference response includes at least one of a quadrature response to the quadrature test signal that has been previously measured or an expected quadrature response to the quadrature test signal.

In Example 3, the subject matter of Example 2 optionally includes wherein: the control circuitry is configured to: make an adjustment to the gyroscopic sensor system based on a result of the comparison.

In Example 4, the subject matter of Example 3 optionally includes wherein: to make an adjustment to the gyroscopic sensor system based on the result of the comparison includes at least one of: adjusting the gyroscopic sensor system to at least partially account for a difference between the quadrature response and the reference response; or adjusting an output value of the gyroscopic sensor system to at least partially account for a difference between the quadrature response and the reference response.

In Example 5, the subject matter of Example 4 optionally includes wherein: to make an adjustment to the gyroscopic sensor system based on the result of the comparison includes adjusting the gyroscopic sensor system, wherein adjusting the gyroscopic sensor system includes adjusting a property of at least one of the first primary mode or the second primary mode.

In Example 6, the subject matter of any one or more of Examples 4-5 optionally include wherein the adjustment at least partially accounts for an effect that a change in an amplitude of the proof mass has on the output value of the gyroscopic sensor system.

In Example 7, the subject matter of any one or more of Examples 3-6 optionally include wherein the adjustment at least partially accounts for a change in sensitivity of the gyroscopic sensor system.

In Example 8, the subject matter of Example 7 optionally includes wherein the adjustment includes adjusting a difference between a resonant frequency of the first primary mode and a resonant frequency of the second primary mode.

In Example 9, the subject matter of any one or more of Examples 1-8 optionally include wherein: the control circuitry is configured to: recurrently measure the quadrature response of the proof mass to the quadrature test signal.

In Example 10, the subject matter of any one or more of Examples 1-9 optionally include wherein: the quadrature test signal includes an alternating current (AC) signal.

In Example 11, the subject matter of Example 10 optionally includes a quadrature error correction circuit, configured to force the quadrature force circuit using a quadrature error correction signal, wherein the quadrature error correction signal includes a direct current (DC) signal, wherein the quadrature force circuit is configured to be driven by a sum of the quadrature test signal and the quadrature error correction signal.

In Example 12, the subject matter of any one or more of Examples 1-11 optionally include a sense circuit, configured to measure motion of the proof mass in the second primary mode, wherein the sense circuit is configured to measure the quadrature response of the proof mass to the quadrature test signal.

In Example 13, the subject matter of Example 12 optionally includes demodulation circuitry, configured to demodulate an output signal from the sense circuit into the in-phase signal and a quadrature signal; and frequency analysis circuitry, configured to extract an amplitude of a specified frequency component of the quadrature signal, wherein the specified frequency component has a specified frequency matching a frequency of the quadrature test signal, wherein the extracted amplitude of the specified frequency component comprises the quadrature response of the proof mass to the quadrature test signal.

In Example 14, the subject matter of Example 13 optionally includes wherein the specified frequency is configured to differ from a resonant frequency of the first primary mode and a resonant frequency of the second primary mode.

In Example 15, the subject matter of any one or more of Examples 1-14 optionally include gyroscopic analysis circuitry, configured to use the in-phase signal to determine a rate of rotation of the proof mass about a gyroscopic axis.

Example 16 is a method for adjusting a gyroscopic sensor system including a proof mass, the method comprising: forcing the proof mass using a quadrature test signal that is configured to generate a quadrature response in the proof mass that is in quadrature with an in-phase signal of the gyroscopic sensor system; measuring the quadrature response of the proof mass to the quadrature test signal; and comparing the quadrature response to a reference response.

In Example 17, the subject matter of Example 16 optionally includes at least one of: adjusting the gyroscopic sensor system to at least partially account for a difference between the quadrature response and the reference response; or adjusting an output value of the gyroscopic sensor system to at least partially account for a difference between the quadrature response and the reference response.

In Example 18, the subject matter of Example 17 optionally includes wherein: the quadrature test signal includes an alternating current (AC) signal at a specified frequency; and measuring the quadrature response of the proof mass to the quadrature test signal includes: measuring a motion of the proof mass that is in quadrature with the in-phase signal; and determining an amplitude of a frequency component of the quadrature response at the specified frequency.

In Example 19, the subject matter of any one or more of Examples 16-18 optionally include wherein: the reference response includes at least one of a quadrature response to the quadrature test signal that has been previously measured or an expected quadrature response to the quadrature test signal.

Example 20 is a gyroscopic sensor system, comprising: a proof mass, configured to vibrate in a first primary mode and a second primary mode, wherein the first primary mode is driven into resonance, wherein an in-phase signal is induced in the second primary mode in response to a rotation of the gyroscopic sensor system; a quadrature force circuit, configured to force the second primary mode of the proof mass; and control circuitry, configured to: drive the quadrature force circuit using a quadrature test signal that is configured to generate a quadrature response in the proof mass that is in quadrature with the in-phase signal; and measure the quadrature response of the proof mass to the quadrature test signal; and make an adjustment to the gyroscopic sensor system based on the measured quadrature response.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

Each of the non-limiting aspects above can stand on its own or can be combined in various permutations or combinations with one or more of the other aspects or other subject matter described in this document.

The above detailed description includes references to the accompanying drawings, which form a part of the detailed description. The drawings show, by way of illustration, specific examples that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the terms "or" and "and/or" are used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The term "about," as used herein, means approximately, in the region of, roughly, or around. When the term "about" is used in conjunction with a numerical range, it modifies that range by extending the boundaries above and below the numerical values set forth. In general, the term "about" is used herein to modify a numerical value above and below the stated value by a variance of 10%. In one aspect, the term "about" means plus or minus 10% of the numerical value of the number with which it is being used. Therefore, about 50% means in the range of 45%-55%. Numerical ranges recited herein by endpoints include all numbers and fractions subsumed within that range (e.g., 1 to 5 includes 1, 1.5, 2, 2.75, 3, 3.90, 4, 4.24, and 5). Similarly, numerical ranges recited herein by endpoints include subranges subsumed within that range (e.g., 1 to 5 includes 1-1.5, 1.5-2, 2-2.75, 2.75-3, 3-3.90, 3.90-4, 4-4.24, 4.24-5, 2-5, 3-5, 1-4, and 2-4).

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Such instructions can be read and executed by one or more processors to enable performance of operations comprising a method, for example. The instructions are in any suitable form, such as but not limited to source code, compiled code, interpreted code, executable code, static code, dynamic code, and the like.

Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other examples may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the examples should be determined with reference to the appended claims, along with the full scope of equivalents to which such claims are entitled.

Claims

1. A gyroscopic sensor system, comprising:

   a proof mass, configured to vibrate in a first primary mode and a second primary mode, wherein the first primary mode is driven into resonance, wherein an in-phase signal is induced in the second primary mode in response to a rotation of the gyroscopic sensor system;
   a quadrature force circuit, configured to force the second primary mode of the proof mass; and
   control circuitry, configured to:

      drive the quadrature force circuit using a quadrature test signal that is configured to generate a quadrature response in the proof mass that is in quadrature with the in-phase signal; and
      measure the quadrature response of the proof mass to the quadrature test signal.

2. The gyroscopic sensor system of claim 1, wherein:
   the control circuitry is configured to:
   compare the quadrature response of the proof mass to a reference response, wherein the reference response includes at least one of a quadrature response to the quadrature test signal that has been previously measured or an expected quadrature response to the quadrature test signal.

3. The gyroscopic sensor system of claim 2, wherein:
   the control circuitry is configured to:
   make an adjustment to the gyroscopic sensor system based on a result of the comparison.

4. The gyroscopic sensor system of claim 3, wherein:

to make an adjustment to the gyroscopic sensor system based on the result of the comparison includes at least one of:

adjusting the gyroscopic sensor system to at least partially account for a difference between the quadrature response and the reference response; or
adjusting an output value of the gyroscopic sensor system to at least partially account for a difference between the quadrature response and the reference response.

5. The gyroscopic sensor system of claim 4, wherein:
to make an adjustment to the gyroscopic sensor system based on the result of the comparison includes adjusting the gyroscopic sensor system, wherein adjusting the gyroscopic sensor system includes adjusting a property of at least one of the first primary mode or the second primary mode.

6. The gyroscopic sensor system of claims 4 or 5, wherein one or more of the following apply:

a) the adjustment at least partially accounts for an effect that a change in an amplitude of the proof mass has on the output value of the gyroscopic sensor system;
b) the adjustment at least partially accounts for a change in sensitivity of the gyroscopic sensor system; and/or
c) the adjustment includes adjusting a difference between a resonant frequency of the first primary mode and a resonant frequency of the second primary mode.

7. The gyroscopic sensor system of any of claims 1 to 6, wherein:
the control circuitry is configured to:
recurrently measure the quadrature response of the proof mass to the quadrature test signal.

8. The gyroscopic sensor system of any of claims 1 to 7, wherein the quadrature test signal includes an alternating current (AC) signal, the gyroscopic sensor system optionally further comprising
a quadrature error correction circuit, configured to force the quadrature force circuit using a quadrature error correction signal, wherein the quadrature error correction signal includes a direct current (DC) signal, wherein the quadrature force circuit is configured to be driven by a sum of the quadrature test signal and the quadrature error correction signal.

9. The gyroscopic sensor system of any of claims 1 to 8, comprising:
a sense circuit, configured to measure motion of the proof mass in the second primary mode, wherein the sense circuit is configured to measure the quadrature response of the proof mass to the quadrature test signal.

10. The gyroscopic sensor system of claim 9, comprising:

demodulation circuitry, configured to demodulate an output signal from the sense circuit into the in-phase signal and a quadrature signal; and
frequency analysis circuitry, configured to extract an amplitude of a specified frequency component of the quadrature signal, wherein the specified frequency component has a specified frequency matching a frequency of the quadrature test signal, wherein the extracted amplitude of the specified frequency component comprises the quadrature response of the proof mass to the quadrature test signal;
wherein optionally the specified frequency is configured to differ from a resonant frequency of the first primary mode and a resonant frequency of the second primary mode.

11. The gyroscopic sensor system of any of claims 1 to 10, comprising:
gyroscopic analysis circuitry, configured to use the in-phase signal to determine a rate of rotation of the proof mass about a gyroscopic axis.

12. A method for adjusting a gyroscopic sensor system including a proof mass, the method comprising:

forcing the proof mass using a quadrature test signal that is configured to generate a quadrature response in the proof mass that is in quadrature with an in-phase signal of the gyroscopic sensor system;
measuring the quadrature response of the proof mass to the quadrature test signal; and
comparing the quadrature response to a reference response.

13. The method of claim 12, comprising at least one of:

adjusting the gyroscopic sensor system to at least partially account for a difference between the quadrature response and the reference response; or

adjusting an output value of the gyroscopic sensor system to at least partially account for a difference between the quadrature response and the reference response;

and wherein further optionally, the reference response includes at least one of a quadrature response to the quadrature test signal that has been previously measured or an expected quadrature response to the quadrature test signal.

14. The method of claim 13, wherein:

the quadrature test signal includes an alternating current (AC) signal at a specified frequency; and
measuring the quadrature response of the proof mass to the quadrature test signal includes:

measuring a motion of the proof mass that is in quadrature with the in-phase signal; and
determining an amplitude of a frequency component of the quadrature response at the specified frequency.

15. A gyroscopic sensor system, comprising:

a proof mass, configured to vibrate in a first primary mode and a second primary mode, wherein the first primary mode is driven into resonance, wherein an in-phase signal is induced in the second primary mode in response to a rotation of the gyroscopic sensor system;
a quadrature force circuit, configured to force the second primary mode of the proof mass; and
control circuitry, configured to:

drive the quadrature force circuit using a quadrature test signal that is configured to generate a quadrature response in the proof mass that is in quadrature with the in-phase signal; and
measure the quadrature response of the proof mass to the quadrature test signal; and
make an adjustment to the gyroscopic sensor system based on the measured quadrature response.

FIG. 1

**FIG. 2**

EP 4 603 798 A2

300

| 302 | FORCE THE PROOF MASS USING A QUADRATURE TEST SIGNAL THAT IS CONFIGURED TO GENERATE A QUADRATURE RESPONSE IN THE PROOF MASS THAT IS IN QUADRATURE WITH AN IN-PHASE SIGNAL OF THE GYROSCOPIC SENSOR SYSTEM |

| 304 | MEASURE A QUADRATURE RESPONSE OF THE PROOF MASS TO THE QUADRATURE TEST SIGNAL |

| 306 | COMPARE THE QUADRATURE RESPONSE TO A REFERENCE RESPONSE |

**FIG. 3**

PROCESSOR

INSTRUCTIONS

MAIN MEMORY

INSTRUCTIONS

STATIC MEMORY

INSTRUCTIONS

PROOF MASS STORAGE

INSTRUCTIONS

NETWORK INTERFACE DEVICE

COMMUNICATIONS NETWORK

INTERLINK

DISPLAY UNIT

INPUT DEVICE

NAVIGATION DEVICE

SENSORS

SIGNAL GENERATION DEVICE

OUTPUT CONTROLLER

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63553066, Clark
- US 79668224